# EUROPEAN PATENT SPECIFICATION

(11) **EP 3 723 101 B1**
(45) Date of publication and mention of the grant of the patent: **26.03.2025**
(21) Application number: 18885341.0
(22) Date of filing: 10.12.2018
(51) Int. Cl.: G21F 5/00, G21C 15/247, G21F 5/12, G21F 5/10, G21F 5/012, G21F 5/008, G21F 9/36, G21F 9/28

(54) **METHOD FOR THE LONG-TERM STORAGE OF SPENT NUCLEAR FUEL AND COOLING AND STORAGE TANK FOR THE IMPLEMENTATION THEREOF**
VERFAHREN ZUR LANGZEITLAGERUNG VON VERBRAUCHTEN BRENNSTÄBEN SOWIE KÜHL- UND LAGERTANK ZUR UMSETZUNG DES VERFAHRENS
PROCÉDÉ DE STOCKAGE PROLONGÉ DE COMBUSTIBLE USÉ ET CUVE DE REFROIDISSEMENT ET DE STOCKAGE POUR SA MISE EN OEUVRE

(30) Priority: 08.12.2017 RU 2017142901
(43) Date of publication of application: 14.10.2020
(73) Proprietor: Joint Stock Company "Akme-Engineering", Moscow 115035 (RU)
(72) Inventor: TOSHINSKIY, Georgiy Il'ich, Obninsk Kaluzhskaya oblast 249033 (RU); KOMLEV, Oleg Gennad'evich, Obninsk Kaluzhskaya oblast 249037 (RU); DEDUL', Aleksandr Vladislavovoich, Podolsk Moskovskaya oblast 142116 (RU); GRIGOR'EV, Sergey Aleksandrovich, Moscow 119049 (RU)
(74) Representative: Isern Patentes y Marcas S.L.
(86) International application number: PCT/RU2018/000800
(87) International publication number: WO 2019/112482

(56) References cited:
- EP-A1- 3 029 685
- KR-A- 20100 035 731
- RU-C1- 2 132 098
- RU-C1- 2 279 725
- RU-C1- 2 348 085
- US-A- 4 147 938
- US-A1- 2014 177 775
- ZRODNIKOV A V ET AL: "Problemy ipodkhody k obrascheniju s otrabotavshimi yadernymi toplivom zhidkometallicheskikh reaktorov atomnykh podvodnykh lodok [PROBLEMS AND APPROACHES TO MANAGEMENT OF SPENT NUCLEAR FUEL OF LIQUID-METAL-COOLANT REACTORS OF NUCLEAR SUBMARINES]", no. 1, 30 November 2006 (2006-11-30), pages 13 - 22, XP009521825, ISSN: 0204-3327, Retrieved from the Internet <URL:https://www.elibrary.ru/item.asp?id=12786555&> [retrieved on 20210805]
- ZHURNAL IZVESTIYA VYSSHIKH UCHEBNYKH ZAVEDENY, YADERNAYA ENERGETIKA: "Problemy ipodkhody k obrascheniju s otrabotavshimi yadernymi toplivom zhidkometallicheskikh reaktorov atomnykh podvodnykh lodok", ZHURNAL IZVESTIYA VYSSHIKH UCHEBNYKH ZAVEDENY, YADERNAYA ENERGETIKA, no. 1, 2007, Obninsk, pages 13 - 22, XP009521825, ISSN: 0204-3327

## Description

### Technical Field

The claimed group of inventions belongs to the nuclear power industry, namely to methods of handling spent nuclear fuel, and, first of all, of reactors with a lead-bismuth coolant that operate without partial reloading of fuel.

### Background

The method for the long-term storage of spent nuclear fuel is disclosed in RU Patent No. 2550092; the method comprises the placement of a spent fuel assembly in steel finned cases pre-filled with a liquid lead. To do this, each case is positioned in a vertical electric furnace. Then, each case together with a spent fuel assembly submerged into liquid lead is removed from the electric furnace and is placed into an air-cooled storage cell. Due to a high melting temperature of lead (327□) and a low temperature of cooling air, lead is rapidly solidified, and afterheat of the spent fuel assembly is transferred due to thermal conductivity of lead through the case wall to the cooling air. The disadvantage of this technical solution is its inapplicability for storing several spent fuel assemblies, let alone a reactor active zone as a whole, because of a high level of afterheat and unacceptably high temperatures of fuel element cladding, when the heat transfer takes place due to thermal conductivity of solid lead or lead that remains liquid in the central part of the spent fuel assembly.

A method for storing the whole active zone discharged from nuclear-powered submarine reactors with a lead-bismuth coolant in a storage tank pre-filled with an eutectic lead-bismuth alloy with the melting temperature of 123.5 □ is also disclosed in the prior art (see e.g. EP 3 029 685 or see A.V. Zrodnikov, A.N. Zabudko, S.V. Ignatiev et al. «Problemy i podkhody k obrascheniyu s otrabotavshym yadernym toplivom zhidkometallicheskikh reaktorov atomnykh podvodnykh lodok» ("Problems and Approaches to Management of Spent Nuclear Fuel of Liquid Metal Coolant Reactors of Nuclear Submarines"). Journal "Izvestiya Vysshikh Uchebnykh Zavedenyi". Yadernaya Energetika. No. 1, 2007, pages 13-22). After loading an active zone into a storage tank and switching off a heating system, a lead-bismuth alloy is rapidly solidified, and afterheat is removed due to the alloy thermal conductivity and then through the storage tank wall to ambient air without exceeding the permissible temperatures of fuel element claddings, because of a low level of afterheat of active zones of a nuclear-powered submarine reactor, since a value of an installed capacity utilization factor is low, which is characteristic of nuclear-powered submarine reactor operation modes, and relatively long exposure of the reactor active zone prior to discharging after the completion of the life-time. The disadvantage of the above method is its inapplicability for civil nuclear power plant reactors because of a high afterheat level due to the high value of installed capacity utilization factor, which is characteristic of civil nuclear power plant operation modes and the impossibility of long exposure of the active zone of the reactor to provide afterheat drop after the completion of the life-time, which could be resulted in the forced outage of the corresponding reactor.

KR 2010 0035731 teaches the use of a density difference of Pb-Bi-alloy as reactor coolant due to a temperature difference for a natural circulation of the coolant in the nuclear reactor.

### Summary of the invention

The problem to be solved by the present group of inventions is the creation of the spent nuclear fuel handling technology providing the simplification of the process and reduction of term for reloading a nuclear fuel with a high level of afterheat, providing a high level of safety during handling and long-term storage of simultaneously discharged large amount of spent nuclear fuel without disassembling an active zone of a removable unit from a civil nuclear power plant reactor, cost saving and increase in economic efficiency of the handling technology, in particular, at the step of long-term and controlled storage of spent nuclear fuel.

The technical effects achievable while implementing the claimed method of the long-term storage of spent nuclear fuel are, in particular, the simplification of the process and the reduction of terms for reloading the nuclear fuel, efficient long-term and controlled storage of a large amount of spent nuclear fuel simultaneously discharged without disassembling an active zone being part of the removable unit, providing a high level of safety of such storage, forming a reliable and multistep in-depth protection from the release of radioactive products into the environment and ensuring economic efficiency due to the reduction of reactor compartment volume by excluding chamber-type cases with individual spent fuel assemblies.

The essence of the claimed method as set out in claim for the long-term storage of spent nuclear fuel consists in discharging a spent nuclear fuel as a whole from a reactor without disassembling an active zone being part of a removable unit, and placing it in a cooldown and storage tank, which was previously put in a mine with a cooling system, and filled with an eutectic liquid lead-bismuth alloy. The cooling system is, for example, a ring-shaped tank with circulating water placed inside a concrete mine for removing heat from walls of the cooldown and storage tank to the ring-shaped tank through an air gap. The construction of the tank containing a spent nuclear fuel submerged below the level of an eutectic lead-bismuth alloy provides conditions for natural circulation, maintaining a liquid state and monitoring a temperature of the eutectic lead-bismuth alloy to remove afterheat of the spent nuclear fuel being part of the removable unit through the cooldown and storage tank housing to the mine without exceeding the permissible temperature of the eutectic lead-bismuth alloy during a storage period until afterheat of the spent nuclear fuel of the removable unit is reduced to a level allowing discharging the cooldown and storage tank into an on-site packing container without exceeding the permissible temperature values. At the same time, monitoring an eutectic lead-bismuth alloy temperature is carried out, for example, by means of temperature sensors mounted at an inlet and an outlet of a cooldown and storage tank location zone. Next, the cooldown and storage tank is removed from the mine and placed in the on-site packing container for further cooling down and storage on the nuclear power plant site without exceeding the permissible temperature of an eutectic lead-bismuth alloy during the removal of afterheat of the spent nuclear fuel by natural circulation of atmospheric air until the lead-bismuth eutectic alloy solidifies therein before reloading into a cask for removing thereof from the nuclear power plant site. A concrete container, having in its cylindrical housing top and bottom windows for atmospheric air natural circulation, can be used, for example, as an on-site packing container. Then, the cooldown and storage tank is reloaded from the on-site packing container into the cask without taking any additional heat removal measures, and is transported to an area intended for its long-term storage or processing of the spent nuclear fuel of the removable unit housed within the same. After that, a spent nuclear fuel of the removable unit is discharged from the cooldown and storage tank to the long-term storage tank on a special site or for disassembling an active zone at an enterprise for processing a spent nuclear fuel. To do this, an eutectic lead-bismuth alloy is first brought to a liquid state by means of a heating system, which, for example, can be built into the construction of a cooldown and storage tank or can be an independent transportable or stationary device integrated with a water ring-shaped tank.

The technical effects achievable while implementing the claimed cooldown and storage tank are as follows: the simplification of the process and reduction of terms for reloading nuclear fuel of reactors of civil nuclear power plants, efficient long-term and controlled storage of a large amount of simultaneously discharged spent nuclear fuel without disassembling a reactor active zone of a removable unit, providing a high level of storage safety, forming a reliable and multistep in-depth protection from the release of radioactive products into the environment, and economic efficiency due to the reduction of a reactor compartment volume by excluding chamber-type cases with individual spent fuel assemblies, and due to the multiple reuse of a cooldown and storage tank.

The essence of the claimed cooldown and storage tank as set out in claim 7 consists in the following: the cooldown and storage tank contains a housing filled with an eutectic lead-bismuth alloy to the required level, a protective displacer plug, a sealing device of the displacer plug, a device preventing upfloat of spent nuclear fuel discharged as a whole from a reactor into a cooldown and storage tank without disassembling an active zone being part of a removable unit and the displacer plug, wherein a diameter of the displacer plug is less than a diameter of the removable unit. If a displacer plug, after submerging into the cooldown and storage tank, has a positive buoyancy, it is put into the cooldown and storage tank and kept in working position using such additional means as, for example, mechanical jacks or a removable load. In addition, between a cooldown and storage tank housing and a zone containing a displacer plug and a removable unit, there is further a separation shell having the required height forming a downtaking ring-shaped channel between the cooldown and storage tank housing to provide a natural circulation circuit of an eutectic lead-bismuth alloy and a heat transfer through the cooldown and storage tank housing to the environment after submerging the removable unit and the displacer plug into the cooldown and storage tank and raising a level of the lead-bismuth eutectic alloy until the hot ascending flow of the eutectic lead-bismuth alloy starts overflowing into the downtaking ring-shaped channel, wherein a lower part of the separating shell has windows, through which a cooled lead-bismuth alloy enters an inlet of a removable unit zone, thereby closing a natural circulation circle of the eutectic lead-bismuth alloy in the cooldown and storage tank. For increasing a heat removal rate, the outer surface of the cooldown and storage tank can be provided, if necessary, with longitudinal fins.

### Brief Description of Drawing

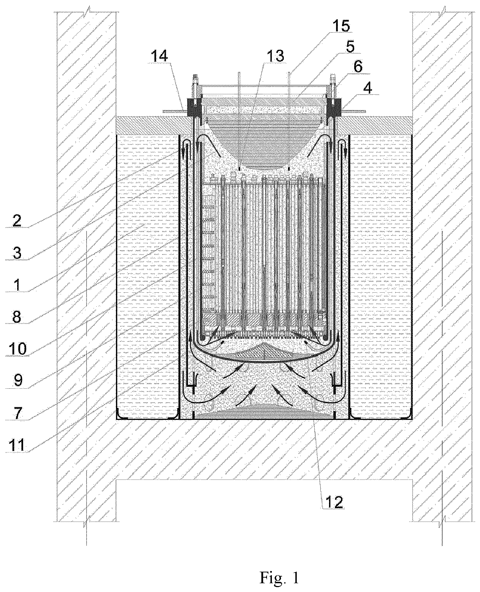

Figure 1 comprises a drawing illustrating the construction of a cooldown and storage tank.

As depicted in Figure 1, a cooldown and storage tank (hereinafter referred to as tank), preliminarily placed into a concrete mine in a ring-shaped tank 1 with circulating water, consists of a housing 2 filled with an eutectic lead-bismuth alloy 3 to the required level 4, and contains a protective displacer plug 5, a sealing device 6 of the displacer plug, a mechanical device 7 preventing upfloat of the spent nuclear fuel of a removable unit 8 contained inside the tank. The displacer plug 5 has a diameter that is less than a diameter of the removable unit 8 with spent nuclear fuel contained inside the tank, forming an ascending ring-shaped channel for the hot lead-bismuth alloy. If a displacer plug 5, after being submerged into the tank, has a positive buoyancy, then, for example, mechanical jacks or a removable load can be further used for submerging thereof into the cooldown and storage tank and keeping in working position. Between the tank housing 2 and the zone containing the displacer plug 5 and the removable unit 8, further there is a shell 9 having a required height to form a downtaking ring-shaped channel 10 between the tank housing 2 to provide natural circulation circuit of an eutectic lead-bismuth alloy 3 and a heat transfer through the tank housing 2 into the environment after submerging the removable unit 8 and displacer plug 5 therein and overflowing the hot ascending flow of the eutectic lead-bismuth alloy 3 into the ring-shaped channel 10. In the lower part of the separation shell 9 there are windows 11, through which a cooled eutectic lead-bismuth alloy 3 enters an inlet of the removable unit 8 location area, thus closing a natural circulation circle of an eutectic lead-bismuth alloy 3 in the tank.

### Description of Embodiments

The claimed method for the long-term storage of spent nuclear fuel can be carried out in the following way. First, a cooldown and storage tank is filled with a liquid eutectic lead-bismuth alloy, the liquid state of which is provided by heating to a required temperature by means of a heating system, that, for example, can be built into the construction of the cooldown and storage tank or can be an independent transportable or stationary device integrated with the ring-shaped water tank. A lead-bismuth alloy made of lead and bismuth industrial grades is used as a lead-bismuth eutectic alloy in the cooldown and storage tank that also significantly reduces the price of the spent nuclear fuel long-term storage technology as a whole. Then, the cooldown and storage tank is placed into a concrete mine with a cooling system, which is, for example, a ring-shaped tank with circulating water contained inside a concrete mine to remove heat from the cooldown and storage tank walls to a ring-shaped tank through an air gap. Next, the spent nuclear fuel as a whole without disassembling an active zone being part of the removable unit is discharged from the reactor into the prepared cooldown and storage tank for subsequent cooling by means of natural circulation of an eutectic lead-bismuth alloy after submerging the removable unit below the level of said alloy through the cooldown and storage tank housing into the mine without exceeding the permissible temperature of the lead-bismuth eutectic alloy, that is provided by the construction of the cooldown and storage tank (Fig. 1). As soon as afterheat of the spent nuclear fuel of the removable unit drops to a level allowing reloading the cooldown and storage tank into the on-site packing container without exceeding permissible temperatures, the cooldown and storage tank is removed from the mine and placed inside the on-site packing container for further cooling without exceeding the permissible temperature of the eutectic lead-bismuth alloy, and afterheat of the spent nuclear fuel is removed due to the atmospheric air natural circulation until the eutectic lead-bismuth alloy solidifies therein and stores during the required time period. A temperature of the eutectic lead-bismuth alloy is monitored, for example, by means of temperature monitoring sensors installed at the inlet and outlet of the removable unit location area in the cooldown and storage tank. A reinforced concrete container, having a cylindrical body provided with top and bottom windows for natural circulation of atmospheric air, can be used as an on-site packing container. After solidification of the eutectic lead-bismuth alloy, and storing the cooldown and storage tank on the nuclear power plant site during the required period of time, the cooldown and storage tank is reloaded from the on-site container to the cask without taking additional measures for heat removal, and is transported to a long-term storage area on a special site or site for processing a spent nuclear fuel. Next, an eutectic lead-bismuth alloy is brought to a liquid state by means of a heating system, and the spent nuclear fuel of the removable unit is discharged from the cooldown and storage tank into a long-term lead-filled storage tank located on a long-term storage site, which does not require any additional measures for cooling the spent nuclear fuel due to a low afterheat level thereof. If a cooldown and storage tank is transported to an enterprise for processing a spent nuclear fuel, the discharged spent nuclear fuel of the removable unit is disassembled to fuel rod arrays for further processing. After discharging the spent nuclear fuel of the removable unit, the cooldown and storage tank is returned to a nuclear power plant for subsequent reuse.

The mode of operation of the cooldown and storage tank used for implementing the claimed method of a long-term storage of spent nuclear fuel consists in the following. A displacer plug 5, after submerging into a tank 8 of removable unit, provides the rise of the level of an eutectic lead-bismuth liquid alloy 3 until it flows over the upper edge of a separation shell 9. If the displacer plug 5 has a negative buoyancy in the eutectic lead-bismuth liquid alloy 3, it will submerge inside the tank due to gravity. If the displacer plug 5 submerged in the tank, has a positive buoyancy, it can be brought to the working position inside the tank by means of mechanical jacks or a removable load. The eutectic lead-bismuth liquid alloy 3 is kept liquid before and after submerging into a tank 8 of a removable unit, and is prevented from solidification at the downtaking section of the ring-shaped channel 10 after drop of a spent nuclear fuel afterheat level by means of a heating system aggregated with a tank housing 2 and located outside thereof. Heated with afterheat, the eutectic lead-bismuth alloy having a lower density as compared to the density of "cold" eutectic lead-bismuth alloy at the inlet of the removable unit 8 location area rises within the tank in the ascending flow until it starts overflowing the separation shell 9, then it flows down in the descending flow along the ring-shaped channel 10 cooling due to the heat transfer through the wall of tank 2 to the environment. In order to enhance the heat removal rate, the outer surface of the tank 2 housing, if required, can be provided with longitudinal fins. The cooled eutectic lead-bismuth alloy flows to the inlet of the removable unit 8 location area through windows 11 located in the lower part of separation shell 9, thereby closing a natural circulation circuit. The required flow rate of the eutectic lead-bismuth alloy is provided by the dynamic pressure created by the height of separation shell 9 and by the difference in average temperatures of the eutectic lead-bismuth alloy, and, accordingly, the densities at up- and downtaking sections of the natural circulation circuit. In order to monitor temperatures of the eutectic lead-bismuth alloy 3, and, as a consequence, a level of the spent nuclear fuel afterheat, the tank is provided with sensors 12 and 13 monitoring a temperature of the eutectic lead-bismuth alloy positioned at the inlet and outlet of the removable unit 8 location area, and, accordingly, through special channels 14 and 15.

## Claims

1. A method for the long-term storage of spent nuclear fuel consisting in the steps of:
- discharging a removable unit (8) as a whole from the reactor, wherein the removable unit comprises spent nuclear fuel, wherein the spent nuclear fuel constitutes an active zone, and wherein discharching of the removable unit occurs without disassembling the active zone, and
- placing it inside a cooldown and storage tank preliminarily placed in a mine with a cooling system and filled with an eutectic liquid lead-bismuth alloy (3),
wherein the construction of the cooldown and storage tank, is **characterized in that** submerging the spent nuclear fuel being part of the removable unit therein below the level of the eutectic lead-bismuth alloy (3) provides natural circulation conditions,
- maintaining a liquid state of the eutectic lead-bismuth alloy (3) and
- monitoring a temperature thereof to remove afterheat of the spent nuclear fuel being part of the removable unit (8) through a housing of the cooldown and storage tank to the mine without exceeding the permissible temperature of the eutectic lead-bismuth alloy (3) during a storage period until afterheat of the spent nuclear fuel being part of removable unit (8) is reduced to the required level (4),
- after that the cooldown and storage tank is removed from the mine and put within an on-site cask without exceeding the permissible temperature of the eutectic lead-bismuth alloy (3) during the removal of afterheat of the spent nuclear fuel due to the natural circulation of atmospheric air until the eutectic lead-bismuth alloy (3) solidifies therein, then
- the cooldown and storage tank is reloaded from the on-site packing container into a cask without taking additional heat removal measures, and is transported to an area for long-term storage or processing of the spent nuclear fuel contained inside it, and afterwards,
- discharging the spent nuclear fuel being part of the removable unit, from the cooldown and storage tank into a long-term storage tank on a special site or
- disassembling the active zone being part of the removable unit (8) at an enterprise for processing a spent nuclear fuel, for which the eutectic lead-bismuth alloy (3) is preliminary brought to a liquid state by means of a heating system.

2. The method according to claim 1, **characterized in that** the cooling system of the mine comprises a ring-shaped tank (1) placed inside a concrete mine and filled with circulating water to remove heat from the cooldown and storage tank walls to the ring-shaped tank (1) through an air gap.

3. The method according to claim 1, **characterized in that** the liquid state of the eutectic lead-bismuth alloy (3) is maintained by means of a heating system.

4. The method according to claim 3, **characterized in that** the heating system is built in the construction of the cooldown and storage tank or represents an independent transportable or stationary device integrated with the ring-shaped tank (1).

5. The method according to claim 1, **characterized in that** a reinforced concrete container, the cylindrical body of which has top and bottom windows (11) for passing the atmospheric air during its natural circulation, is used as an on-site packing container.

6. The method according to claim 1, **characterized in that** a lead-bismuth alloy (3) made of lead and bismuth of technical grade is used as the eutectic lead-bismuth alloy (3) in the cooldown and storage tank.

7. A cooldown and storage tank comprising a housing (2) filled with an eutectic lead-bismuth alloy (3) to the required level, a protective displacer plug (5), a sealing device (6) of the displacer plug (5), a device for preventing upfloat of spent nuclear fuel located inside the cooldown and storage tank,
**characterized in that** the cooldown and storage tank comprises spent nuclear fuel, the spent nuclear fuel being comprised in and forming the active zone of a removable unit (8), the removable unit being discharged as a whole from the reactor without disassembling the active zone, a a diameter of the displacer plug (5) is less than a diameter of the removable unit, and between the cooldown and storage tank housing (2) and a zone containing the displacer plug (5) and the removable unit (8) there is further a separation shell (9) having the required height and forming a downtaking ring-shaped channel (10) between the cooldown and storage tank housing (2) to form a natural circulation circuit of the eutectic lead-bismuth alloy (3) and to transfer heat through the cooldown and storage tank housing (2) to the environment after submerging the removable unit (8) and the displacer plug (5) into the cooldown and storage tank and raising a level of the lead-bismuth eutectic alloy (3) until the hot ascending flow of the eutectic lead-bismuth alloy (3) starts overflowing into the downtaking ring-shaped channel (10), wherein a lower part of the separation shell (9) has windows (11), through which the cooled lead-bismuth alloy (3) enters an inlet of the removable unit zone, thereby closing a natural circulation circle of the eutectic lead-bismuth alloy (3) in the cooldown and storage tank.

8. The tank according to claim 7, **characterized in that** it further contains a heating system.

9. The tank according to claim 7, **characterized in that** it further contains mechanical jacks or removable loads to submerge the displacer plug (5) into its normal position within the cooldown and storage tank, if the displacer plug (5) has a positive buoyancy.

10. The tank according to claim 7, **characterized in that** the outer surface of the cooldown and storage tank housing (2) is further provided with fins to increase the heat removal rate.

11. The tank according to claim 7, **characterized in that** it further contains sensors for monitoring a temperature of the eutectic lead-bismuth alloy (3) that are positioned through special channels at the inlet and outlet of the removable unit location zone.

12. The tank according to claim 7, **characterized in that** a lead-bismuth alloy (3) made of lead and bismuth of technical grade is used as the eutectic lead-bismuth alloy (3) in the cooldown and storage tank.

## Patentansprüche

1. Verfahren zur Langzeitlagerung von verbrauchten Brennstäben, das aus den folgenden Schritten besteht:
- Entladen einer entnehmbaren Einheit (8) als Ganzes aus dem Reaktor,
wobei die entnehmbare Einheit verbrauchte Brennstäbe umfasst, wobei die verbrauchten Brennstäbe eine aktive Zone bilden und wobei Entladen der entnehmbaren Einheit ohne Demontieren der aktiven Zone erfolgt und
- Platzieren derselben in einen Abkühl- und Lagertank, der zuvor in einem Bergwerk mit einem Kühlsystem platziert und mit einer eutektischen flüssigen Blei-Wismut-Legierung (3) gefüllt ist, wobei die Konstruktion des Abkühl- und Lagertanks, **dadurch gekennzeichnet ist, dass**
Eintauchen der verbrauchten Brennstäbe, die Teil der entnehmbaren Einheit sind, darin unter dem Niveau der eutektischen Blei-Wismut-Legierung (3) natürliche Zirkulationsbedingungen bereitstellt,
- Aufrechterhalten eines flüssigen Zustands der eutektischen Blei-Wismut-Legierung (3) und
- Überwachen einer Temperatur davon, um Nachwärme der verbrauchten Brennstäbe, die Teil der entnehmbaren Einheit (8) sind, durch ein Gehäuse des Abkühl- und Lagertanks zu dem Bergwerk abzuführen, ohne Überschreiten der zulässigen Temperatur der eutektischen Blei-Wismut-Legierung (3) während eines Lagerungszeitraums, bis Nachwärme der verbrauchten Brennstäbe, die Teil der entnehmbaren Einheit (8) sind, auf das erforderliche Niveau (4) reduziert ist,
- danach wird der Abkühl- und Lagertank aus dem Bergwerk entfernt und in ein Vor-Ort-Fass gebracht, ohne dass die zulässige Temperatur der eutektischen Blei-Wismut-Legierung (3) während der Abfuhr von Nachwärme der verbrauchten Brennstäbe aufgrund der natürlichen Zirkulation von atmosphärischer Luft überschritten wird, bis die eutektische Blei-Wismut-Legierung (3) darin erstarrt, dann
- wird der Abkühl- und Lagertank aus dem Vor-Ort-Verpackungscontainer in ein Fass umgeladen, ohne dass zusätzliche Wärmeabfuhrmaßnahme getroffen werden, und zu einem Bereich zur Langzeitlagerung oder Aufbereitung der darin enthaltenen verbrauchten Brennstäbe transportiert, und anschließend
- Entladen der verbrauchten Brennstäbe, die Teil der entnehmbaren Einheit sind, aus dem Abkühl- und Lagertank in einen Langzeitlagertank an einem speziellen Standort oder
- Demontieren der aktiven Zone, die Teil der entnehmbaren Einheit (8) ist, in einem Unternehmen zum Aufbereiten eines verbrauchten Brennstabs, wofür die eutektische Blei-Wismut-Legierung (3) mit Hilfe eines Heizsystems zuvor in einen flüssigen Zustand gebracht wird.

2. Verfahren nach Anspruch 1, **dadurch gekennzeichnet, dass** das Kühlsystem des Bergwerks einen ringförmigen Tank (1) umfasst, der im Inneren eines Betonbergwerks platziert und mit zirkulierendem Wasser gefüllt ist, um Wärme von den Wänden des Abkühl- und Lagertanks durch einen Luftspalt in den ringförmigen Tank (1) abzuführen.

3. Verfahren nach Anspruch 1, **dadurch gekennzeichnet, dass** der flüssige Zustand der eutektischen Blei-Wismut-Legierung (3) mit Hilfe eines Heizsystems aufrechterhalten wird.

4. Verfahren nach Anspruch 3, **dadurch gekennzeichnet, dass** das Heizsystem in die Konstruktion des Abkühl- und Lagertanks eingebaut ist oder eine unabhängige transportable oder stationäre Vorrichtung darstellt, die in den ringförmigen Tank (1) integriert ist.

5. Verfahren nach Anspruch 1, **dadurch gekennzeichnet, dass** als Vor-Ort-Verpackungscontainer ein Stahlbetoncontainer verwendet wird, dessen zylindrischer Körper oben und unten Fenster (11) zum Durchlassen der atmosphärischen Luft während ihrer natürlichen Zirkulation aufweist.

6. Verfahren nach Anspruch 1, **dadurch gekennzeichnet, dass** als eutektische Blei-Wismut-Legierung (3) in dem Abkühl- und Lagertank eine Blei-Wismut-Legierung (3) aus Blei und Wismut in technischer Qualität verwendet wird.

7. Abkühl- und Lagertank, der ein Gehäuse (2), das mit einer eutektischen Blei-Wismut-Legierung (3) bis zum erforderlichen Niveau gefüllt ist, einen schützenden Verdrängerstopfen (5), eine Abdichtungsvorrichtung (6) des Verdrängerstopfens (5), eine Vorrichtung zum Verhindern des Aufschwimmens von verbrauchten Brennstäben umfasst, die sich innerhalb des Abkühl- und Lagertanks befindet,
**dadurch gekennzeichnet, dass** der Abkühl- und Lagertank verbrauchte Brennstäbe umfasst, wobei die verbrauchten Brennstäbe in der aktiven Zone einer entnehmbaren Einheit (8) enthalten sind und diese bilden, wobei die entnehmbare Einheit als Ganzes aus dem Reaktor entnommen wird, ohne die aktive Zone zu demontieren,
ein Durchmesser des Verdrängerstopfens (5) kleiner ist als ein Durchmesser der entnehmbaren Einheit und zwischen dem Abkühl- und Lagertankgehäuse (2) und einer Zone, die den Verdrängerstopfen (5) und die entfernbare Einheit (8) enthält, sich ferner eine Trennschale (9) befindet, die die erforderliche Höhe aufweist und einen nach unten führenden ringförmigen Kanal (10) zwischen dem Abkühl- und Lagertankgehäuse (2) bildet, um einen natürlichen Zirkulationskreislauf der eutektischen Blei-Wismut-Legierung (3) zu bilden und Wärme durch das Abkühl- und Lagertankgehäuse (2) in die Umgebung nach dem Eintauchen zu übertragen, nachdem die entnehmbare Einheit (8) und der Verdrängerstopfen (5) in den Abkühl- und Lagertank eingetaucht werden und ein Niveau der eutektischen Blei-Wismut-Legierung (3) angehoben wird, bis der heiße aufsteigende Strom der eutektischen Blei-Wismut-Legierung (3) beginnt, in den nach unten führenden ringförmigen Kanal (10) überzulaufen, wobei ein unterer Teil des Trennmantels (9) Fenster (11) aufweist, durch die die abgekühlte Blei-Wismut-Legierung (3) in einen Einlass der Zone der entnehmbaren Einheit eintritt, wodurch ein natürlicher Zirkulationskreislauf der eutektischen Blei-Wismut-Legierung (3) in dem Abkühl- und Speicherbehälter geschlossen wird.

8. Tank nach Anspruch 7, **dadurch gekennzeichnet, dass** er ferner ein Heizsystem enthält.

9. Tank nach Anspruch 7, **dadurch gekennzeichnet, dass** er ferner mechanische Heber oder entnehmbare Lasten enthält, um den Verdrängerstopfen (5) in seine normale Position innerhalb des Abkühl- und Lagertanks einzutauchen, wenn der Verdrängerstopfen (5) einen positiven Auftrieb aufweist.

10. Tank nach Anspruch 7, **dadurch gekennzeichnet, dass** die Außenoberfläche des Abkühl- und Lagertankgehäuses (2) ferner mit Rippen versehen ist, um die Wärmeabfuhrrate zu erhöhen.

11. Tank nach Anspruch 7, **dadurch gekennzeichnet, dass** er ferner Sensoren zum Überwachen einer Temperatur der eutektischen Blei-Wismut-Legierung (3) enthält, die über spezielle Kanäle an dem Einlass und Auslass der Zone für die Aufnahme der entnehmbaren Einheit angeordnet sind.

12. Tank nach Anspruch 7, **dadurch gekennzeichnet, dass** als eutektische Blei-Wismut-Legierung (3) in dem Abkühl- und Lagertank eine Blei-Wismut-Legierung (3) aus Blei und Wismut in technischer Qualität verwendet wird.

## Revendications

1. Procédé destiné à l'entreposage à long terme du combustible nucléaire usé consistant en les étapes de :
- évacuation
d'une unité amovible (8) sous forme d'ensemble du réacteur,
dans lequel l'unité amovible comprend du combustible nucléaire usé, dans lequel le combustible nucléaire usé constitue une zone active, et dans lequel l'évacuation de
l'unité amovible se produit sans désassemblage de la zone active,
et
- placement de celle-ci à l'intérieur d'un réservoir de refroidissement et de stockage préalablement placé dans une mine dotée d'un système de refroidissement et rempli d'un alliage liquide eutectique plomb-bismuth (3), dans lequel la construction du réservoir de refroidissement et de stockage,
est **caractérisée en ce que**
la submersion
du combustible nucléaire usé faisant partie de l'unité amovible
à l'intérieur en dessous du niveau de l'alliage eutectique plomb-bismuth (3) fournit des conditions de circulation naturelle,
- maintien d'un état liquide de l'alliage eutectique plomb-bismuth (3) et
- surveillance d'une température de celui-ci pour éliminer la chaleur résiduelle du combustible nucléaire usé faisant partie de l'unité amovible (8) à travers un boîtier du réservoir de refroidissement et de stockage jusqu'à la mine sans dépasser la température admissible de l'alliage eutectique
plomb-bismuth (3)
pendant une période de stockage jusqu'à ce que la post-chauffe du combustible nucléaire usé faisant partie de l'unité amovible (8) soit ramenée au niveau requis (4),
- après cela le réservoir de refroidissement et de stockage est retiré de la mine et placé au sein d'un château de transport sur site sans dépasser la température admissible de l'alliage eutectique plomb-bismuth (3) pendant l'élimination de la post-chauffe du combustible nucléaire usé due à la circulation naturelle de l'air atmosphérique jusqu'à ce que l'alliage eutectique plomb-bismuth (3) se solidifie à l'intérieur de celui-ci, puis
- le réservoir de refroidissement et de stockage est rechargé du conteneur d'emballage sur site dans un château de transport sans prendre de mesures supplémentaires d'élimination de la chaleur, et est transporté vers une zone de stockage à long terme ou de traitement du combustible nucléaire usé qu'il contient, et par la suite,
- évacuation du combustible nucléaire usé faisant partie de l'unité amovible, du réservoir de refroidissement et de stockage dans un réservoir de stockage à long terme sur un site spécial ou
- désassemblage de la zone active faisant partie de l'unité amovible (8) au niveau d'une entreprise de traitement d'un combustible nucléaire usé, pour lequel l'alliage eutectique plomb-bismuth (3) est préalablement amené à un état liquide au moyen d'un système de chauffage.

2. Procédé selon la revendication 1, **caractérisé en ce que** le système de refroidissement de la mine comprend un réservoir en forme d'anneau (1) placé à l'intérieur d'une mine de béton et rempli d'eau en circulation pour éliminer la chaleur des parois de réservoir de refroidissement et de stockage vers le réservoir en forme d'anneau (1) par l'intermédiaire d'un espace d'air.

3. Procédé selon la revendication 1, **caractérisé en ce que** l'état liquide de l'alliage eutectique plomb-bismuth (3) est maintenu au moyen d'un système de chauffage.

4. Procédé selon la revendication 3, **caractérisé en ce que** le système de chauffage est incorporé dans la construction du réservoir de refroidissement et de stockage ou représente un dispositif indépendant, transportable ou stationnaire, intégré au réservoir en forme d'anneau (1).

5. Procédé selon la revendication 1, **caractérisé en ce qu'**un conteneur en béton armé, dont le corps cylindrique est muni de fenêtres supérieure et inférieure (11) pour le passage de l'air atmosphérique pendant sa circulation naturelle, est utilisé comme conteneur d'emballage sur site.

6. Procédé selon la revendication 1, **caractérisé en ce qu'**un alliage plomb-bismuth (3) composé de plomb et de bismuth de qualité technique est utilisé comme alliage eutectique plomb-bismuth (3) dans le réservoir de refroidissement et de stockage.

7. Réservoir de refroidissement et de stockage comprenant un boîtier (2) rempli d'un alliage eutectique plomb-bismuth (3) jusqu'au niveau requis, un bouchon de palpeur protecteur (5), un dispositif d'étanchéité (6) du bouchon de palpeur protecteur (5), un dispositif destiné à empêcher la remontée du combustible nucléaire usé situé à l'intérieur du réservoir de refroidissement et de stockage,
**caractérisé en ce que** le réservoir de refroidissement et de stockage comprend du combustible nucléaire usé, le combustible nucléaire usé est compris dans la zone active d'une unité amovible (8) et forme la zone active, l'unité amovible étant évacuée sous forme d'ensemble du réacteur sans désassemblage de la zone active, un un diamètre du bouchon de palpeur protecteur (5) est inférieur à un diamètre de l'unité amovible, et entre le boîtier de réservoir de refroidissement et de stockage (2) et une zone contenant le bouchon de palpeur protecteur (5) et l'unité amovible (8), il y a en outre une coque de séparation (9) ayant la hauteur requise et formant un canal en forme d'anneau descendant (10) entre le boîtier de réservoir de refroidissement et de stockage (2) pour former un circuit de circulation naturelle de l'alliage eutectique plomb-bismuth (3) et pour transférer la chaleur à travers le boîtier de réservoir de refroidissement et de stockage (2) vers l'environnement après la submersion de l'unité amovible (8) et du bouchon de palpeur protecteur (5) dans le réservoir de refroidissement et de stockage et l'augmentation d'un niveau de l'alliage eutectique plomb-bismuth (3) jusqu'à ce que le flux ascendant chaud de l'alliage eutectique plomb-bismuth (3) commence à déborder dans le canal en forme d'anneau descendant (10), dans lequel une partie inférieure de la coque de séparation (9) a des fenêtres (11), à travers lesquelles l'alliage plomb-bismuth (3) refroidi entre dans une entrée de la zone d'unité amovible, fermant de ce fait un cercle de circulation naturelle de l'alliage eutectique plomb-bismuth (3) dans le réservoir de refroidissement et de stockage.

8. Réservoir selon la revendication 7, **caractérisé en ce qu'**il contient en outre un système de chauffage.

9. Réservoir selon la revendication 7, **caractérisé en ce qu'**il contient en outre des vérins mécaniques ou des charges amovibles pour submerger le bouchon de palpeur protecteur (5) dans sa position normale au sein du réservoir de refroidissement et de stockage, si le bouchon de palpeur protecteur (5) a une flottabilité positive.

10. Réservoir selon la revendication 7, **caractérisé en ce que** la surface externe du boîtier de réservoir de refroidissement et de stockage (2) est en outre pourvue d'ailettes pour augmenter le taux d'élimination de la chaleur.

11. Réservoir selon la revendication 7, **caractérisé en ce qu'**il contient en outre des capteurs pour surveiller une température de l'alliage eutectique plomb-bismuth (3) qui sont positionnés à travers des canaux spéciaux au niveau de l'entrée et de la sortie de la zone d'emplacement d'unité amovible.

12. Réservoir selon la revendication 7, **caractérisé en ce qu'**un alliage plomb-bismuth (3) composé de plomb et de bismuth de qualité technique est utilisé comme alliage eutectique plomb-bismuth (3) dans le réservoir de refroidissement et de stockage.
